# EUROPEAN PATENT SPECIFICATION

(11) **EP 4 228 121 B1**
(45) Date of publication and mention of the grant of the patent: **13.08.2025**
(21) Application number: 21879834.6
(22) Date of filing: 21.09.2021
(51) Int. Cl.: H02J 50/20, H02J 50/40, H02J 50/80, H02J 50/90, H02J 7/00, B23Q 17/22

(54) **POWER SUPPLY CONTROL SYSTEM AND CONTROL SYSTEM**
STROMVERSORGUNGSSTEUERUNGSSYSTEM UND STEUERUNGSSYSTEM
SYSTÈME DE COMMANDE D'ALIMENTATION ÉLECTRIQUE ET SYSTÈME DE COMMANDE

(30) Priority: 13.10.2020 JP 2020172650
(43) Date of publication of application: 16.08.2023
(73) Proprietor: METROL CO., LTD., Tachikawa-shi Tokyo 190-0011 (JP)
(72) Inventor: WASA, Yusuke, Tachikawa-shi, Tokyo 190-0011 (JP); KANNO, Takayuki, Tachikawa-shi, Tokyo 190-0011 (JP)
(74) Representative: Ström & Gulliksson AB
(86) International application number: PCT/JP2021/034561
(87) International publication number: WO 2022/080093

(56) References cited:
- JP-A- 2013 523 066
- JP-A- 2017 085 682
- JP-B1- 6 764 987
- US-A1- 2018 241 255

## Description

### TECHNICAL FIELD

The present invention relates to a power supply control system and a control system.

### BACKGROUND ART

A wireless sensor used in a general machine tool, such as touch probes and tool length setters, includes a sensor (transmitting device) that is operated by a battery and a receiver (receiving device) that acquires a measurement value sensed by the sensor and power from the machine tool.

The battery for the sensor requires replacement, and when to replace the battery is difficult to predict because the battery life greatly varies depending on the frequency of use and operating environment.

Patent Document 1 discloses a technology related to a battery charger for charging the battery of a touch probe.

Patent Document 1: Japanese Unexamined Utility Model Application, Publication No. S61-109664 Document US 10 992 187 B2 discloses a power supply system, comprising: the electronic device including a battery that drives the electronic device,a power receiving antenna that acquires a radio wave for transmitting power to the electronic device, a conversion unit that converts the radio wave received by the power receiving antenna to power, and a charging unit that charges the battery with the power converted by the conversion unit; and a power supply control unit that controls a condition for transmitting the power to the power receiving antenna so that the electronic device operates without interruption.

### DISCLOSURE OF THE INVENTION

### Problems to be Solved by the Invention

Both of the wireless sensor using a common battery and the touch probe having the battery charger of Patent Document 1 cannot be maintenance-free, requiring the machine tool to be stopped every time the battery is replaced or charged. There are many machine tools used, and thus an increase in the number of sensors requires frequent replacement or wired-charging of the batteries, making the replacement or the charging complicated. This results in frequent stop of the machine tools and lowers productivity.

The battery is often replaced inside the machine tool. If the sensor fails and requires replacement due to the entry of cutting fluid or chips into the sensor during the replacement of the battery, it takes time to resume the production.

When an operator enters the machine tool for maintenance, machining setup, or attachment or detachment of an object to be machined, the safety of the battery charger of Patent Document 1, if placed inside the machine tool, for example, may be affected.

An object of the present invention is to provide a power supply control system and a control system that are capable of charging a power source of a sensor placed in a machine tool easily and safely.

### Means for Solving the Problems

An aspect of the present invention is directed to a power supply control system according to claim 1.

### Effects of the Invention

The present invention can provide a power supply control system and a control system that are capable of charging a power source of a sensor placed in a machine tool easily and safely.

### BRIEF DESCRIPTION OF THE DRAWINGS

FIG. 1A is a view illustrating a general configuration of a control system of an embodiment of the present invention;
FIG. 1B is a view illustrating a general configuration of a control system of the embodiment of the present invention;
FIG. 1C is a view illustrating a general configuration of a control system of the embodiment of the present invention;
FIG. 2 is a block diagram illustrating a configuration of an electronic device of the embodiment of the present invention;
FIG. 3 is a block diagram illustrating a configuration of a receiver of the embodiment of the present invention;
FIG. 4 is a view illustrating an example of time sharing between communication and power supply by the control system of the embodiment of the present invention;
FIG. 5A is a view illustrating how the control system of the embodiment of the present invention operates; and
FIG. 5B is a view illustrating how the control system of the embodiment of the present invention operates.

### PREFERRED MODE FOR CARRYING OUT THE INVENTION

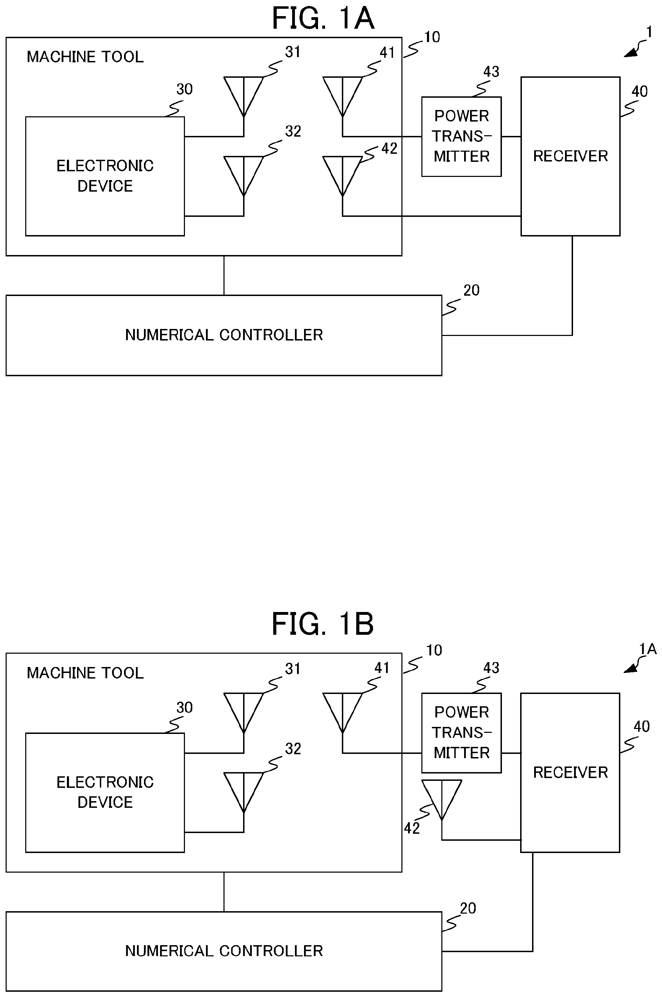

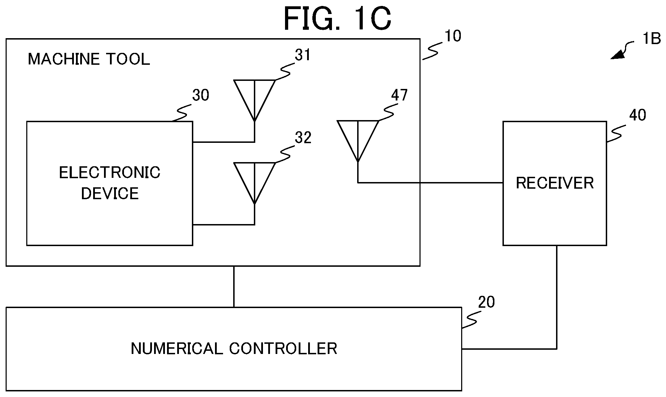

An embodiment of the present invention will be described below with reference to FIGS. 1 to 5B.

### [1 Configuration of Control System of Embodiment]

### [1.1 General Configuration]

FIG. 1A is a view illustrating a general configuration of a control system 1 of the present embodiment. The control system 1 includes a machine tool 10, a numerical controller 20, an electronic device 30, and a receiver 40.

The electronic device 30 is placed inside or near the machine tool 10. The machine tool 10, the numerical controller 20, and the receiver 40 are connected to be able to communicate with each other. Although FIG. 1A shows only a single electronic device 30 in the machine tool 10, the number of electronic devices 30 is not limited to one, and any plural number of electronic devices 30 may be placed.

The machine tool 10 is a device that performs predetermined machining, such as cutting. The machine tool 10 includes a motor that is driven for the machining of a workpiece, a main shaft and a feed shaft attached to the motor, and jigs and tools corresponding to the shafts. The machine tool 10 drives the motor based on an operation command to perform predetermined machining.

The predetermined machining is not limited to particular machining. Specifically, the machine tool may perform other types of machining, for example, grinding, polishing, rolling, and forging, in addition to the cutting. The machining may or may not involve processing of a workpiece.

The present embodiment can be applied to not only the machine tools, but also a wide variety of general industrial machines. Examples of the industrial machine include various types of machines, for example, machine tools, machining centers, industrial robots, and service robots. The industrial machine is not necessarily the one particular to the present embodiment and can be a general industrial machine.

The numerical controller 20 controls a main shaft and drive shaft of the machine tool 10 in accordance with a machining program. The numerical controller 20 can be achieved by allowing, for example, a computer device including a CPU, memory, and an input/output interface, to execute an appropriate control program.

In particular, the numerical controller 20 can acquire an ON-OFF signal or a measurement value acquired from the electronic device 30 described later via the receiver 40 described later and can perform numerical control using the acquired ON-OFF signal or measurement value.

The numerical controller 20 sends a control signal to the receiver 40 described later, and the receiver 40 changes for the electronic device 30 described later the state of the electronic device 30 to a "standby" state or a "measuring" state based on the control signal.

The electronic device 30 can achieve wireless communication and is provided inside or near the machine tool 10. The electronic device 30 may be a position sensor, such as a touch probe, that detects the positions of a tool and a workpiece. In this case, the positions of the tool and the workpiece detected by the electronic device 30 as the position sensor are used as position feedback (position FB).

Alternatively, the electronic device 30 may be a temperature sensor that detects, for example, the temperatures of the tool and the workpiece. In this case, the temperatures of the tool and the workpiece detected by the electronic device 30 as the temperature sensor are used as temperature feedback (temperature FB).

Although the following description may be made on the assumption that the electronic device 30 is a touch probe, the embodiment of the present invention is not limited to this example.

As shown in FIG. 1A, the electronic device 30 includes a power receiving antenna 31 and a first communication antenna 32. As will be described in detail later, the power receiving antenna 31 is an antenna that receives a radio wave for power transmission from the receiver 40. The first communication antenna 32 is an antenna that receives a radio wave for communication with the receiver 40.

The receiver 40 is a receiving device that acquires an ON-OFF signal of a switch, which is the result of comparison between a measured voltage and a threshold voltage, for example, from the electronic device 30 serving as the touch probe, and wirelessly supplies power to the electronic device 30. When the electronic device 30 is, for example, a tool length setter, the receiver 40 acquires a measurement value from the electronic device 30 and wirelessly supplies power to the electronic device 30.

As shown in FIG. 1A, the receiver 40 includes a power supply antenna 41, a second communication antenna 42, and a power transmitter 43. As will be described in detail later, the power supply antenna 41 is an antenna that sends a radio wave for power transmission to the electronic device 30. The second communication antenna 42 is an antenna that transmits and receives a radio wave for communication with the electronic device 30.

The power transmitter 43 is a unit that transmits power to the power supply antenna 41. Although the power transmitter 43 is placed outside a housing of the receiver 40 in FIG. 1A, the power transmitter 43 is not limited to this example and may be placed inside the housing of the receiver 40 to be integrated with the receiver 40. The power transmitter 43 placed outside the housing of the receiver 40 may be arranged inside the machine tool 10 or outside the machine tool 10.

In a set of the electronic device 30 and the receiver 40, the power receiving antenna 31 of the electronic device 30 and the power supply antenna 41 of the receiver 40 are used to wirelessly supply power from the receiver 40 to the electronic device 30. Concurrently, in the set of the electronic device 30 and the receiver 40, the first communication antenna 32 of the electronic device 30 and the second communication antenna 42 of the receiver 40 are used to achieve the communication to acquire the ON-OFF signal or the measurement value from the electronic device 30 or control the electronic device 30.

The radio wave used for the wireless power supply between the electronic device 30 and the receiver 40 may be in a wireless frequency band of, for example, 920 MHz, 2.4 GHz, or 5.7 GHz. For use of the radio wave with a frequency in each of the wireless frequency bands, a channel at a predetermined frequency around the frequency is used.

The transmission of the radio wave may start after a check by carrier-sense multiple access. The "carrier-sense" is a protocol for avoiding interference. This protocol verifies the absence of other radio station using a wireless channel (own channel) on which the transmission is to be made before starting the transmission of the radio wave, and no transmission at the same frequency is made if the other radio device is using the own channel.

The radio wave used for the communication between the electronic device 30 and the receiver 40 may be in a wireless frequency band of 2.4 GHz, for example.

As shown in FIG. 1A, the power supply antenna 41 and the second communication antenna 42 of the receiver 40 are provided inside a housing of the machine tool 10, and a body of the receiver 40 having a control function (a power supply control unit 44, a second communication unit 45, and an operation control unit 46 which are described later) and the power transmitter 43 are provided outside the housing of the machine tool 10. Specifically, for example, a hole is formed in the housing of the machine tool 10 to connect the power supply antenna 41, the second communication antenna 42, and the power transmitter 43 with a cable that passes through the hole and transmits and receives signals.

When the whole part of the receiver 40 is placed outside the housing of the machine tool 10, the radio wave transmitted and received between the receiver 40 and the electronic device 30 is screened by the housing of the machine tool 10, degrading power supply efficiency. However, when the power supply antenna 41 and the second communication antenna 42 are separated from the power transmitter 43 and the body of the receiver 40, the power supply efficiency can be kept from degrading. When the power supply antenna 41 and the second communication antenna 42 are separated from the power transmitter 43 and the body of the receiver 40, these components can be placed flexibly.

The power supply antenna 41 and the second communication antenna 42 are covered with a resin case (cover). This can keep chips generated in a cutting process by the machine tool 10 from adhering to the power supply antenna 41 and the second communication antenna 42.

The receiver 40 may include a plurality of power supply antennas 41 and a plurality of second communication antennas 42. The increased number of antennas improves power transmission efficiency and communication efficiency.

FIG. 1A shows that the power supply antenna 41 and the second communication antenna 42 of the receiver 40 are provided inside the housing of the machine tool 10, and the body of the receiver 40 having the control function is provided outside the housing of the machine tool 10. However, this is merely an example, and the receiver 40 is not limited to this example.

FIGS. 1B and 1C show control systems 1A and 1B of other variations. As shown in FIG. 1B, the power supply antenna 41 alone may be provided inside the housing of the machine tool 10, and other components of the receiver 40 including the second communication antenna 42 may be provided outside the housing of the machine tool 10. Alternatively, as shown in FIG. 1C, an integrated antenna 47 obtained by combining the power supply antenna 41 and the second communication antenna 42 may be provided inside the housing of the machine tool 10, and other components of the receiver 40 may be provided outside the housing of the machine tool 10.

As described above, the radio wave used for the wireless power supply between the electronic device 30 and the receiver 40 may be in a wireless frequency band of, for example, 2.4 GHz or 5.7 GHz. The radio wave for the communication is suitably in a wireless frequency band of, for example, 920 MHz.

When the radio wave for the wireless power supply and the radio wave for the communication are in different wireless frequency bands, the power supply antenna 41 and the second communication antenna 42 are suitably separated antennas as shown in FIGS. 1A and 1B.

When the radio wave for the wireless power supply and the radio wave for the communication are in the same wireless frequency band of, for example, 2.4 GHz, the integrated antenna 47 obtained by combining the power supply antenna 41 and the second communication antenna 42 is suitably used as shown in FIG. 1C. In this case, as will be described in detail later, the integrated antenna 47 is time-shared, i.e., used in a time period for sending the radio wave for the wireless power supply and a time period for transmitting and receiving the radio wave for the communication.

Although the radio wave for the wireless power supply and the radio wave for the communication are in different wireless frequency bands, the configuration shown in FIG. 1C can be achieved when an array antenna, for example, is used as the integrated antenna 47.

In the following description, the set of the electronic device 30 and the receiver 40 may be referred to as a "measurement system".

### [1.2 Configuration of Electronic Device]

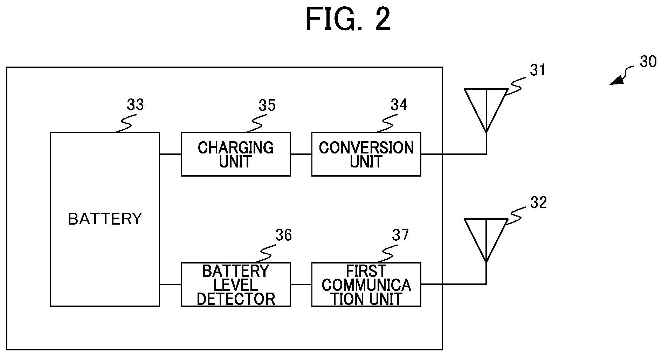

FIG. 2 is a functional block diagram illustrating the configuration of the electronic device 30. As shown in FIG. 2, the electronic device 30 includes, in addition to the power receiving antenna 31 and the first communication antenna 32 described above, a battery 33, a conversion unit 34, a charging unit 35, a battery level detector 36, and a first communication unit 37.

The electronic device 30 also includes, in addition to the components shown in FIG. 2, components that are well known in the art and essential for the output of the ON-OFF signal based on the comparison between the sensed or measured value and a threshold value, but these components are not shown.

The battery 33 is a chargeable secondary battery that drives the electronic device 30. The battery 33 may be, for example, a lithium ion battery or a nickel-hydrogen battery, but the battery of the embodiment of the present invention is not limited to these batteries.

The conversion unit 34 converts the radio wave for the power transmission that the power receiving antenna 31 has received to power. The conversion unit 34 may be, for example, a rectifier circuit that converts the radio wave into a direct current circuit, but is not limited to this example.

The charging unit 35 charges the battery 33 with the power converted by the conversion unit 34.

The battery level detector 36 detects the remaining level of the battery 33. For example, the battery level detector 36 detects the power of battery 33 consumed hourly, and subtracts an accumulated value of the power consumed hourly from the capacity of the battery 33 to detect the remaining level of the battery 33.

The first communication unit 37 communicates with the receiver 40 using the radio wave transmitted and received by the first communication antenna 32 to send the ON-OFF signal and information about the value of the remaining level of the battery 33 to the receiver 40 and acquire the control signal for the electronic device 30 from the receiver 40.

The electronic device 30 includes the battery 33, which is particularly a chargeable secondary battery, and stores the power to maintain operational stability during the measurement by the electronic device 30.

### [1.2 Configuration of Receiver]

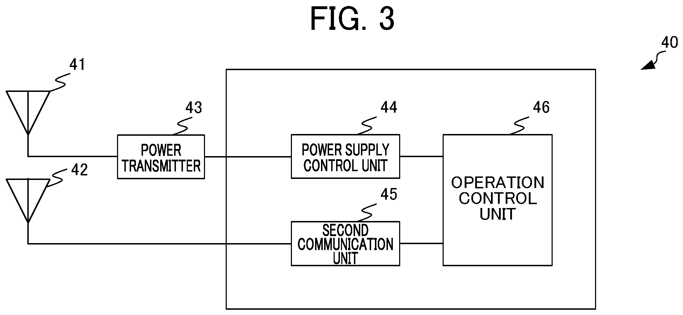

FIG. 3 is a functional block diagram illustrating the configuration of the receiver 40. As shown in FIG. 3, the receiver 40 includes, in addition to the power supply antenna 41, the second communication antenna 42, and the power transmitter 43 described above, a power supply control unit 44, a second communication unit 45, and an operation control unit 46.

The power supply control unit 44 controls power transmission by sending the radio wave using the power supply antenna 41. In particular, the power supply control unit 44 controls a condition for transmitting the power to the power receiving antenna 31 of the electronic device 30 so that the electronic device 30 operates without interruption. The power supply control unit 44 may control the condition based on the information about the electronic device 30 contained in the communication by the second communication unit 45 which will be described later. Alternatively, the power supply control unit 44 may control the condition based on a previously set detail of control. The "detail of control" may be, for example, power supply out of the operating time of the electronic device 30 or power supply in a frequency different from the communication frequency of the electronic device 30. The power supply control unit 44 controls at least one of an interval or output of the power supply to control the power transmission.

The second communication unit 45 communicates with the electronic device 30 by the radio wave transmitted and received by the second communication antenna 42. In particular, the second communication unit 45 acquires the ON-OFF signal and the value of the remaining level of the battery 33 from the electronic device 30 and sends the control signal to the electronic device 30.

The operation control unit 46 controls the power transmission by the power supply control unit 44 and the communication between the second communication unit 45 and the electronic device 30 in a mixed manner. In particular, the operation control unit 46 controls the timings of the power supply and the communication.

As described above, the power supply antenna 41 and the second communication antenna 42 are components separated from the body of the receiver 40 (i.e., the power supply control unit 44, the second communication unit 45, and the operation control unit 46).

### [2 Operation of Control System of Embodiment]

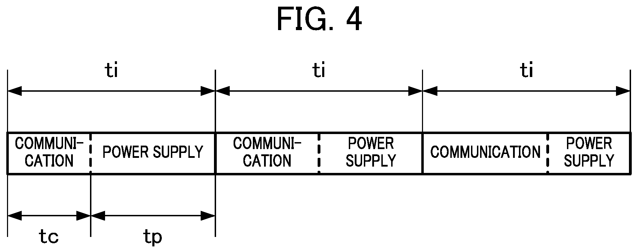

How the control systems 1 to 1B of the present embodiment operate will be described below with reference to FIGS. 4 to 5B.

### [2.1 First Operation Example]

As described above, in the electronic device 30, the battery level detector 36 detects the remaining level of the battery 33, and the first communication unit 37 sends the remaining level of the battery 33 to the receiver 40.

In the receiver 40, the second communication unit 45 acquires the remaining level of the battery 33 from the electronic device 30, and the power supply control unit 44 controls at least one of the interval or output of the power supply by the radio wave that transmits the power based on the remaining level of the battery 33 acquired by the second communication unit 45.

Particularly when the battery 33 of the electronic device 30 is a lithium ion battery, the power supply control unit 44 suitably starts the power transmission by sending the radio wave using the power supply antenna 41 based on the remaining level of the battery 33 falling below a threshold value. The threshold value is a value corresponding to the power required for the stable operation of the electronic device 30.

Alternatively, based on the amount of power consumed from the battery 33 of the electronic device 30, the power supply control unit 44 may send the radio wave using the power supply antenna 41 to transmit the power by the amount consumed.

### [2.2 Second Operation Example]

When the radio wave for the wireless power supply and the radio wave for the communication are in the same wireless frequency band of, for example, 2.4 GHz or 5.7 GHz, as described above, the operation control unit 46 of the receiver 40 controls when to transmit the power by the power supply control unit 44 and when to achieve the communication between the second communication unit 45 and the electronic device 30 to avoid the coincidence of the power transmission and the communication.

FIG. 4 is a view illustrating an example of control of the timings of the power supply and the communication by the operation control unit 46. In the example shown in FIG. 4, the second communication unit 45 starts the communication with the electronic device 30 at regular intervals, and the power supply control unit 44 supplies the power in a free period after the end of the communication. Specifically, in a set of the communication and the power supply, time tc for the communication and time tp for the power supply are not necessarily the same, although total time ti of the time tc for the communication and the time tp for the power supply is always the same.

### [2.3 Third Operation Example]

As described above, in each of the control systems 1 to 1B, the numerical controller 20 performs numerical control of the machine tool 10 and communicates with the receiver 40 to acquire the ON-OFF signal or the measurement value from the electronic device 30 via the receiver 40.

The numerical controller 20 generates control information including a power supply permission signal and sends the control information to the receiver 40. Based on the control information, the receiver 40 sends a control signal to the electronic device 30. Thus, the receiver 40 controls the timing of charging the battery 33.

For example, the control signal may include the timing of charging, i.e., the battery 33 is charged when the electronic device 30 is on standby and the charging of the battery 33 stops when the electronic device 30 is measuring.

Alternatively, the control signal may include an instruction to move the electronic device 30 to an area with high charging efficiency in the machine tool 10.

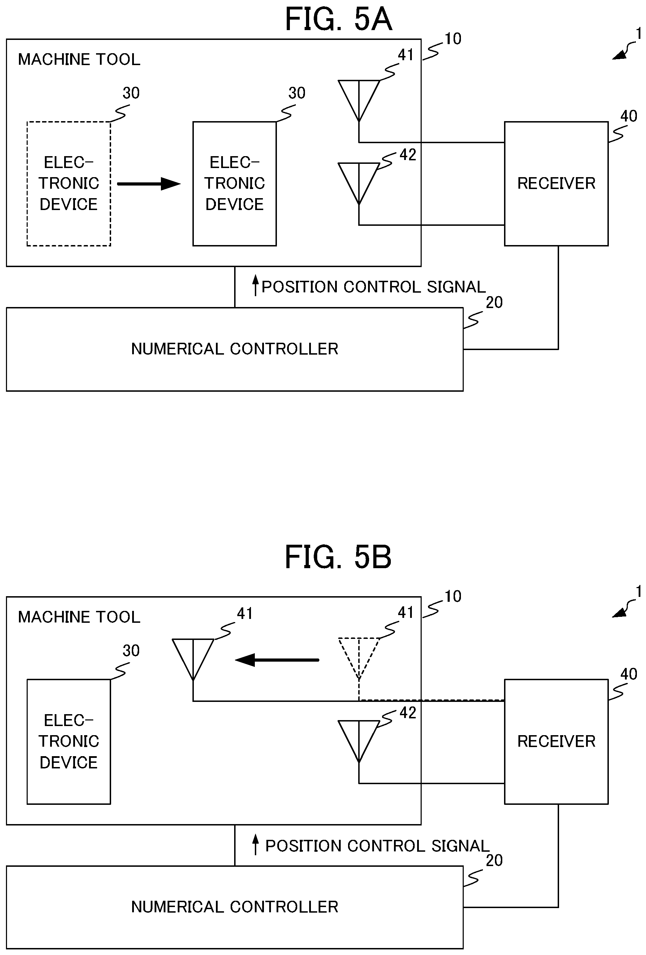

FIG. 5A is a view illustrating the numerical controller 20 moving the electronic device 30 to an area with high charging efficiency in the machine tool 10. As shown in FIG. 5A, the numerical controller 20 sends a position control signal to the machine tool 10 to move the electronic device 30 to the area with high charging efficiency in the machine tool 10. In the example shown in FIG. 5A, the electronic device 30 is moved closer to the power supply antenna 41. However, the electronic device 30 may be moved to any position with high charging efficiency.

Alternatively, the control information may include an instruction to move the power supply antenna 41 to an area with high power supply efficiency in the machine tool 10.

FIG. 5B is a view illustrating the numerical controller 20 moving the power supply antenna 41 to an area with high power supply efficiency in the machine tool 10. As shown in FIG. 5B, the numerical controller 20 sends a position control signal to the machine tool 10 to move the power supply antenna 41 to the area with high power supply efficiency in the machine tool 10. In the example shown in FIG. 5B, the power supply antenna 41 is moved closer to the electronic device 30. However, the power supply antenna 41 may be moved to any position with high power supply efficiency.

In particular, when a mechanism for driving the power supply antenna 41 is provided in the receiver 40, the numerical controller 20 may send the position control signal to the receiver 40.

### [3 Advantages]

The power supply control system 1 of the present embodiment is the power supply control system 1 that supplies power to the electronic device 30. The power supply control system 1 includes: the electronic device 30 including the battery 33 that drives the electronic device 30, the power receiving antenna 31 that acquires a radio wave for transmitting power to the electronic device 30, the conversion unit 34 that converts the radio wave received by the power receiving antenna 31 to power, and the charging unit 35 that charges the battery 33 with the power converted by the conversion unit 34; and the power supply control unit 44 that controls a condition for transmitting the power to the power receiving antenna 31 so that the electronic device 30 operates without interruption.

Thus, a power source of the electronic device 30 placed in the machine tool 10 can be charged easily and safely.

The battery 33 of the electronic device 30 can be charged without limiting the position of the electronic device 30 during the power supply, keeping the power transmission efficiency from decreasing.

The power supply control system 1 of the present embodiment further includes the receiver 40. The electronic device 30 includes the first communication antenna 32 that transmits and receives a radio wave for communication with the receiver 40 and the first communication unit 37 that communicates with the receiver 40 by the radio wave transmitted and received by the first communication antenna 32. The receiver 40 includes the power supply antenna 41 that sends a radio wave for power transmission to the electronic device 30, the second communication antenna 42 that transmits and receives a radio wave for communication with the electronic device 30, and the second communication unit 45 that communicates with the electronic device 30 by the radio wave transmitted and received by the second communication antenna 42. The power supply control unit 44 controls the condition for transmitting the power to the power receiving antenna 31 based on information about the electronic device 30 contained in the communication by the second communication unit 45.

This allows concurrent power supply and communication between the electronic device 30 and the receiver 40.

In the power supply control system of the present embodiment, the electronic device 30 further includes the battery level detector 36 that detects the remaining level of the battery 33. The first communication unit 37 sends the remaining level of the battery detected by the battery level detector 36 to the receiver 40, the second communication unit 45 acquires the remaining level of the battery from the electronic device 30, and the power supply control unit 44 controls at least one of the interval or output of the power supply by the radio wave that transmits the power based on the remaining level of the battery acquired by the second communication unit 45.

Thus, the power can be supplied depending on the remaining level of the battery 33.

In the measurement system of the present embodiment, the receiver 40 may further include the operation control unit 46 that controls when to achieve the communication by the second communication unit 45 and when to transmit the power by the power supply control unit 44.

This can keep the radio wave for the communication between the electronic device 30 and the receiver 40 and the radio wave for the power supply, for example, from interfering with each other.

The operation control unit 46 may perform control so that the second communication unit 45 starts the communication at regular intervals and the power supply control unit 44 sends the radio wave for the power transmission in a free period after the end of the communication and before the start of the next communication.

Thus, although the radio wave for the power supply and the radio wave for the communication have the same frequency, both of the power supply and the communication can be achieved without interference between the radio waves.

Each of the control systems 1 to 1B of the present embodiment is a control system including the measurement system described above, the machine tool 10, and the numerical controller 20 that performs numerical control of the machine tool 10. The electronic device 30 is provided in the machine tool 10.

This allows the power supply from the battery 33 to the electronic device 30 by the control of the machine tool 10 by the numerical controller 20.

In each of the control systems 1 to 1B of the present embodiment the numerical controller 20 may generate the control information including when to charge the battery 33 of the electronic device 30.

Thus, when to charge the battery 33 of the electronic device 30 can be determined by the numerical control by the numerical controller 20.

In each of the control systems 1 to 1B of the present embodiment, the numerical controller 20 may generate the control information including an instruction to move the electronic device 30 to an area with high charging efficiency.

This allows control for improving the charging efficiency the electronic device 30 by the numerical control by the numerical controller 20.

In each of the control systems 1 and 1B of the present embodiment, the numerical controller 20 may generate the control information including an instruction to move the power supply antenna 41 to an area with high power supply efficiency.

This allows control for improving the efficiency of power supply from the receiver 40 by the numerical control by the numerical controller 20.

In each of the control systems 1 to 1B of the present embodiment, the power supply antenna 41 and the second communication antenna 42 are components separated from the power supply control unit 44 and the second communication antenna 45. At least the power supply antenna 41 may be provided inside the housing of the machine tool 10, and at least the power supply control unit 44 and the second communication unit 45 may be provided outside the housing of the machine tool 10.

Thus, compared with when the housing of the machine tool 10 screens the radio wave transmitted and received between the receiver 40 and the electronic device 30 and degrades the power supply efficiency, the power supply efficiency can be kept from degrading. When the power supply antenna 41 and the second communication antenna 42 are separated from the body of the receiver 40, these components can be placed flexibly.

### [4 Variations]

The embodiments have been described above as advantageous embodiments of the present invention, but the scope of the present invention is not limited to the embodiments. Various types of modifications can be made without departing from the spirit of the present invention.

### [4.1 First Variation]

For example, the machine tool 10 and the numerical controller 20 of the above embodiment are separate components. However, the present invention is not limited to this example. For example, the machine tool 10 and the numerical controller 20 may be integrated in the same housing.

### [4.2 Second Variation]

A plurality of modes for the power supply from the receiver 40 to the electronic device 30 may be prepared in advance, and one of the power supply modes may be selected during the standby of the electronic device 30 depending on the purpose of use of the electronic device 30 or the environment surrounding the electronic device 30.

### [4.3 Third Variation]

It has been described in the second operation example that the second communication unit 45 starts the communication with the electronic device 30 at regular intervals and the power supply control unit 44 supplies the power in a free period after the end of the communication. However, the present invention is not limited to this example. For example, the power supply control unit 44 may supply the power in the free period when the communication is achieved and may skip the power supply when the communication fails.

### [4.4 Fourth Variation]

The receiver 40 may include a frequency changer that changes the frequency of the radio wave for the power supply. This is because the frequency of the radio wave that easily reaches the destination varies depending on the environment. When the transmission of the radio wave of a certain frequency fails, the receiver 40 can change the frequency to another frequency using the frequency changer to supply the power smoothly. Using the frequency changer, the receiver 40 can select the frequency with the highest power supply efficiency to supply the power.

The components of each of the control systems 1 to 1B can be implemented by hardware, software, or a combination of the hardware and the software. The control performed in cooperation of the components of each of the control systems 1 to 1B can also be implemented by hardware, software, or a combination of the hardware and the software. The expression "implemented by the software" means that a computer reads and executes a program to implement the functions of the control system or the control.

The program is stored in various types of non-transitory computer readable media and supplied to the computer. The non-transitory computer readable media include various types of tangible storage media. Examples of the non-transitory computer readable media include a magnetic recording medium (e.g., a flexible disk, a magnetic tape, and a hard disk drive), a magneto-optical recording medium (e.g., a magneto-optical disk), a compact disc read only memory (CD-ROM), a CD-R, a CD-R/W, and a semiconductor memory (e.g., a mask ROM, a programmable ROM (PROM), an erasable ROM (EPROM), a flash ROM, and a RAM). The program may be supplied to the computer by various types of transitory computer readable media. Examples of the transitory computer readable media include an electric signal, an optical signal, and an electromagnetic wave. The transitory computer readable media can supply the program to the computer via a wired communication channel such as an electric wire and an optical fiber or a wireless communication channel.

### EXPLANATION OF REFERENCE NUMERALS

1, 1A, 1B Control system
10 Machine tool
20 Numerical controller
30 Electronic Device
31 Power receiving antenna
32 First communication antenna
33 Battery
34 Conversion unit
35 Charging unit
36 Battery level detector
37 First communication unit
40 Receiver
41 Power supply antenna
42 Second communication antenna
43 Power transmitter
44 Power supply control unit
45 Second communication unit
46 Operation control unit

## Claims

1. A control system, comprising a power supply control system that supplies power to an electronic device (30), the power supply control system comprising:
the electronic device (30) including a battery (33) that drives the electronic device (30),
a power receiving antenna (31) that acquires a radio wave for transmitting power to the electronic device (30),
a conversion unit (34) that converts the radio wave received by the power receiving antenna (31) to power, and
a charging unit (35) that charges the battery (33) with the power converted by the conversion unit (34);
a receiver (40); and
a power supply control unit (44) that controls a condition for transmitting the power to the power receiving antenna (31) so that the electronic device (30) operates without interruption, wherein
the electronic device (30) includes
a first communication antenna (32) that transmits and receives a radio wave for communication with the receiver (40), and
a first communication unit (37) that communicates with the receiver (40) by the radio wave transmitted and received by the first communication antenna (32),
the receiver (40) includes
a power supply antenna (41) that sends a radio wave for power transmission to the electronic device (30),
a second communication antenna (42) that transmits and receives a radio wave for communication with the electronic device (30), and
a second communication unit (45) that communicates with the electronic device (30) by the radio wave transmitted and received by the second communication antenna (42), and
the power supply control unit (44) controls the condition for transmitting the power to the power receiving antenna (31) based on information about the electronic device (30) contained in the communication by the second communication unit (45),
wherein the control system further comprises: a machine tool (10), which is an industrial machine; and a numerical controller (20) that performs numerical control of the machine tool (10), wherein
the electronic device (30) is provided in the machine tool (10), and
the numerical controller (20) is configured to acquire a signal or a measurement value from the electronic device (30) via the receiver (40) and perform numerical control of the machine tool (10) using the signal or the measurement value.

2. The control system of claim 1, wherein the electronic device (30) further includes a battery level detector (36) that detects a remaining level of the battery (33),
the first communication unit (37) sends the remaining level of the battery (33) detected by the battery level detector (36) to the receiver (40),
the second communication unit (45) acquires the remaining level of the battery (33) from the electronic device (30), and
the power supply control unit (44) controls at least one of an interval or output of the power supply by the radio wave that transmits the power based on the remaining level of the battery (33) acquired by the second communication unit (45).

3. The control system of claim 1 or 2, wherein the receiver (40) further includes an operation control unit (46) that controls when to achieve the communication by the second communication unit (45) and when to supply the power by the power supply control unit (44).

4. The control system of claim 3, wherein the operation control unit (46)performs control so that the second communication unit (45) starts the communication at regular intervals and the power supply control unit (44) sends the radio wave for the power transmission in a free period after the end of the communication and before the start of the next communication.

5. The control system of any preceding claim, wherein the numerical controller (20) generates control information including when to charge the battery (33) of the electronic device (30).

6. The control system of any preceding claim, wherein the numerical controller (20) generates control information including an instruction to move the electronic device (30) to an area with high charging efficiency.

7. The control system of any preceding claim, wherein the numerical controller (20) generates control information including an instruction to move the power supply antenna (41) to an area with high power supply efficiency.

8. The control system of any preceding claim, wherein the power supply antenna (41) and the second communication antenna (42) are components separated from the power supply control unit (44) and the second communication unit (45),
at least the power supply antenna (41) is provided inside a housing of the machine tool (10), and
at least the power supply control unit (44) and the second communication unit (45) are provided outside the housing of the machine tool (10).

## Patentansprüche

1. Steuersystem, das Folgendes umfasst: ein Stromversorgungssteuersystem, das einer elektronischen Vorrichtung (30) Leistung zuführt, wobei das Stromversorgungssteuersystem Folgendes umfasst:
die elektronische Vorrichtung (30), die eine Batterie (33) enthält, die die elektronische Vorrichtung (30) antreibt,
eine Leistungsempfangsantenne (31), die eine Funkwelle zum Übertragen von Leistung zur elektronischen Vorrichtung (30) erfasst,
eine Umwandlungseinheit (34), die die Funkwelle, die durch die Leistungsempfangsantenne (31) empfangen wird, in Leistung umwandelt, und
eine Ladeeinheit (35), die die Batterie (33) mit der Leistung lädt, die durch die Umwandlungseinheit (34) umgewandelt wurde;
einen Empfänger (40) und
eine Stromversorgungssteuereinheit (44), die einen Bedingung zum Übertragen der Leistung zur Leistungsempfangsantenne (31) steuert, derart, dass die elektronische Vorrichtung (30) ohne Unterbrechung arbeitet, wobei
die elektronische Vorrichtung (30) Folgendes enthält:
eine erste Kommunikationsantenne (32), die eine Funkwelle zur Kommunikation mit dem Empfänger (40) sendet und empfängt, und
eine erste Kommunikationseinheit (37), die mit dem Empfänger (40) durch die Funkwelle kommuniziert, die durch die erste Kommunikationsantenne (32) gesendet und empfangen wird,
der Empfänger (40) Folgendes enthält:
eine Stromversorgungsantenne (41), die eine Funkwelle zur Leistungsübertragung zur elektronischen Vorrichtung (30) sendet;
eine zweite Kommunikationsantenne (42), die eine Funkwelle zur Kommunikation mit der elektronischen Vorrichtung (30) sendet und empfängt, und
eine zweite Kommunikationseinheit (45), die mit der elektronischen Vorrichtung (30) durch die Funkwelle kommuniziert, die durch die zweite Kommunikationsantenne (42) gesendet und empfangen wird, und
die Stromversorgungssteuereinheit (44) die Bedingung zum Übertragen der Leistung zur Leistungsempfangsantenne (31) auf der Grundlage von Informationen über die elektronische Vorrichtung (30), die in der Kommunikation durch die zweite Kommunikationseinheit (45) enthalten sind, steuert,
wobei das Steuersystem ferner Folgendes umfasst: eine Werkzeugmaschine (10), die eine Industriemaschine ist; und einen numerischen Controller (20), der eine numerische Steuerung der Werkzeugmaschine (10) durchführt, wobei
die elektronische Vorrichtung (30) in der Werkzeugmaschine (10) bereitgestellt ist und
der numerische Controller (20) konfiguriert ist, ein Signal oder einen Messwert von der elektronischen Vorrichtung (30) mittels des Empfängers (40) zu erfassen und eine numerische Steuerung der Werkzeugmaschine (10) unter Verwendung des Signals oder des Messwerts durchführen.

2. Steuersystem nach Anspruch 1, wobei die elektronische Vorrichtung (30) ferner einen Batteriepegeldetektor (36) enthält, der einen verbleibenden Pegel der Batterie (33) detektiert,
die erste Kommunikationseinheit (37) den verbleibenden Pegel der Batterie (33), der durch den Batteriepegeldetektor (36) detektiert wurde, zum Empfänger (40) sendet,
die zweite Kommunikationseinheit (45) den verbleibenden Pegel der Batterie (33) von der elektronischen Vorrichtung (30) erfasst und
die Stromversorgungssteuereinheit (44) ein Intervall und/oder eine Ausgabe der Stromversorgung durch die Funkwelle, die die Leistung überträgt, auf der Grundlage des verbleibenden Pegels der Batterie (33), der durch die zweite Kommunikationseinheit (45) erfasst wurde, steuert.

3. Steuersystem nach Anspruch 1 oder 2, wobei der Empfänger (40) ferner eine Betriebssteuereinheit (46) enthält, die steuert, wann die Kommunikation durch die zweite Kommunikationseinheit (45) verwirklicht werden soll und wann die Leistung durch die Stromversorgungssteuereinheit (44) zugeführt werden soll.

4. Steuersystem nach Anspruch 3, wobei die Betriebssteuereinheit (46) eine Steuerung derart durchführt, dass die zweite Kommunikationseinheit (45) die Kommunikation in regelmäßigen Intervallen startet, und die Stromversorgungssteuereinheit (44) die Funkwelle zur Leistungsübertragung in einem freien Zeitraum nach dem Ende der Kommunikation und vor dem Start der nächsten Kommunikation sendet.

5. Steuersystem nach einem vorhergehenden Anspruch, wobei der numerische Controller (20) Steuerinformationen erzeugt, die enthalten, wann die Batterie (33) der elektronischen Vorrichtung (30) geladen werden soll.

6. Steuersystem nach einem vorhergehenden Anspruch, wobei der numerische Controller (20) Steuerinformationen erzeugt, die einen Befehl enthalten, die elektronische Vorrichtung (30) zu einem Bereich mit hohem Ladewirkungsgrad zu bewegen.

7. Steuersystem nach einem vorhergehenden Anspruch, wobei der numerische Controller (20) Steuerinformationen erzeugt, die einen Befehl enthalten, die Stromversorgungsantenne (41) zu einem Bereich mit hohem Stromversorgungswirkungsgrad zu bewegen.

8. Steuersystem nach einem vorhergehenden Anspruch, wobei die Stromversorgungsantenne (41) und die zweite Kommunikationsantenne (42) Komponenten sind, die von der Stromversorgungssteuereinheit (44) und der zweiten Kommunikationseinheit (45) getrennt sind,
mindestens die Stromversorgungsantenne (41) in einem Gehäuse der Werkzeugmaschine (10) bereitgestellt ist und
mindestens die Stromversorgungssteuereinheit (44) und die zweite Kommunikationseinheit (45) außerhalb des Gehäuses der Werkzeugmaschine (10) bereitgestellt sind.

## Revendications

1. Système de commande, comprenant un système de commande d'alimentation électrique qui alimente en électricité un dispositif électronique (30), le système de commande d'alimentation électrique comprenant :
le dispositif électronique (30) incluant une batterie (33) qui alimente le dispositif électronique (30),
une antenne réceptrice d'énergie (31) qui acquiert une onde radio pour transmettre de l'énergie au dispositif électronique (30),
une unité de conversion (34) qui convertit l'onde radio reçue par l'antenne réceptrice d'énergie (31) en énergie, et
une unité de charge (35) qui charge la batterie (33) avec l'énergie convertie par l'unité de conversion (34) ;
un récepteur (40) ; et
une unité de commande d'alimentation électrique (44) qui commande une condition de transmission de l'énergie à l'antenne réceptrice d'énergie (31) de sorte que le dispositif électronique (30) fonctionne sans interruption, dans lequel
le dispositif électronique (30) inclut
une première antenne de communication (32) qui émet et reçoit une onde radio pour communiquer avec le récepteur (40), et
une première unité de communication (37) qui communique avec le récepteur (40) par l'onde radio émise et reçue par la première antenne de communication (32),
le récepteur (40) inclut
une antenne d'alimentation électrique (41) qui envoie une onde radio pour transmettre de l'énergie au dispositif électronique (30),
une seconde antenne de communication (42) qui émet et reçoit une onde radio pour communiquer avec le dispositif électronique (30), et
une seconde unité de communication (45) qui communique avec le dispositif électronique (30) par l'onde radio émise et reçue par la seconde antenne de communication (42), et
l'unité de commande d'alimentation électrique (44) commande la condition de transmission de l'énergie à l'antenne réceptrice d'énergie (31) sur la base d'informations sur le dispositif électronique (30) contenues dans la communication par la seconde unité de communication (45),
dans lequel le système de commande comprend en outre : une machine-outil (10), qui est une machine industrielle ; et un dispositif de commande numérique (20) qui effectue une commande numérique de la machine-outil (10), dans lequel
le dispositif électronique (30) est disposé dans la machine-outil (10), et
le dispositif de commande numérique (20) est configuré pour acquérir un signal ou une valeur de mesure du dispositif électronique (30) par l'intermédiaire du récepteur (40) et effectuer une commande numérique de la machine-outil (10) à l'aide du signal ou de la valeur de mesure.

2. Système de commande selon la revendication 1, dans lequel le dispositif électronique (30) inclut en outre un détecteur (36) de niveau de batterie qui détecte un niveau restant de la batterie (33),
la première unité de communication (37) envoie le niveau restant de la batterie (33) détecté par le détecteur (36) de niveau de batterie au récepteur (40),
la seconde unité de communication (45) acquiert le niveau restant de la batterie (33) à partir du dispositif électronique (30), et
l'unité de commande d'alimentation électrique (44) commande au moins l'un d'un intervalle ou d'une sortie de l'alimentation électrique par l'onde radio qui transmet l'énergie sur la base du niveau restant de la batterie (33) acquis par la seconde unité de communication (45).

3. Système de commande selon la revendication 1 ou 2, dans lequel le récepteur (40) inclut en outre une unité de commande de fonctionnement (46) qui commande à quel moment réaliser la communication par la seconde unité de communication (45) et à quel moment fournir l'énergie par l'unité de commande d'alimentation électrique (44).

4. Système de commande selon la revendication 3, dans lequel l'unité de commande de fonctionnement (46) effectue une commande de sorte que la seconde unité de communication (45) démarre la communication à intervalles réguliers et l'unité de commande d'alimentation électrique (44) envoie l'onde radio pour la transmission d'énergie pendant une période libre à la fin de la communication et avant le début de la communication suivante.

5. Système de commande selon une quelconque revendication précédente, dans lequel le dispositif de commande numérique (20) génère des informations de commande incluant à quel moment charger la batterie (33) du dispositif électronique (30).

6. Système de commande selon une quelconque revendication précédente, dans lequel le dispositif de commande numérique (20) génère des informations de commande incluant une instruction pour déplacer le dispositif électronique (30) vers une zone avec une efficacité de charge élevée.

7. Système de commande selon une quelconque revendication précédente, dans lequel le dispositif de commande numérique (20) génère des informations de commande incluant une instruction pour déplacer l'antenne d'alimentation électrique (41) vers une zone avec une efficacité d'alimentation électrique élevée.

8. Système de commande selon une quelconque revendication précédente, dans lequel l'antenne d'alimentation électrique (41) et la seconde antenne de communication (42) sont des composants séparés de l'unité de commande d'alimentation électrique (44) et de la seconde unité de communication (45),
au moins l'antenne d'alimentation électrique (41) est disposée à l'intérieur d'un boîtier de la machine-outil (10), et
au moins l'unité de commande d'alimentation électrique (44) et la seconde unité de communication (45) sont disposées à l'extérieur du boîtier de la machine-outil (10).
